# EUROPEAN PATENT SPECIFICATION

(11) **EP 2 531 316 B1**
(45) Date of publication and mention of the grant of the patent: **01.04.2020**
(21) Application number: 11710282.2
(22) Date of filing: 04.02.2011
(51) Int. Cl.: B22D 11/14, G06K 19/00

(54) **METHOD TO MONITOR A CASTING ELEMENT**
VERFAHREN ZUR ÜBERWACHUNG EINES GIESSELEMENTES
ROCÉDÉ DE SURVEILLANCE D' UN ÉLÉMENT DE FONDERIE

(30) Priority: 05.02.2010 IT UD20100020
(43) Date of publication of application: 12.12.2012
(73) Proprietor: Danieli & C. Officine Meccaniche SpA, 33042 Buttrio (Udine) (IT)
(72) Inventor: ANDREATTA, Daniele, I-31030 Borso Del Grappa (IT); POLONI, Alfredo, I-34070 Fogliano Di Redipuglia (IT); DE LUCA, Andrea, I-33047 Remanzacco (IT)
(74) Representative: Petraz, Davide Luigi
(86) International application number: PCT/IB2011/000173
(87) International publication number: WO 2011/095873

(56) References cited:
- WO-A1-2010/057656
- WO-A2-2009/036874
- JP-A- 6 093 327
- JP-A- 2008 129 838
- KR-B1- 100 685 049

## Description

### FIELD OF THE INVENTION

The present invention concerns a method to monitor a casting element, for example an ingot mold or a crystallizer, used in the workings of continuous casting in a production plant for steel products.

In particular the method according to the present invention allows to monitor and memorize the state of functioning of a crystallizer and/or ingot mold used for the production of billets, blooms or slabs.

### BACKGROUND OF THE INVENTION

Casting elements are known comprising an ingot mold, provided with a crystallizer which acts as a mold for the liquid metal and the cross section of which defines the section of the specific cast product.

The crystallizer is generally made of copper and is cooled externally with water to determine the progressive solidification of the liquid metal. The ingot mold and the crystallizer are normally associated to an oscillating basement, the continuous oscillation of which promotes the descent of the metal, preventing it from sticking on the walls.

Crystallizers as a norm provide a maximum number of operating hours, at the end of which they are removed, together with the associated ingot mold, and replaced.

After removal the crystallizers are normally subjected to an inspection check, for example they are sent to an assistance center or their producer, in order to evaluate the state of conservation of the internal lining, the presence of possible deformations on the cross section or on the curve of the profile, substantially, therefore, the level of wear and tear actually reached.

In such plants the process supervision and control are carried out on several levels of supervision by means of automation apparatuses of the known type, for example by means of programmable logic controllers or PLC connected by means of fieldbuses to sensors, transducers and actuators associated to different parts of the plant. The supervision also provides the presence of one or more electronic processors connected by means of a data communication network to the controllers.

In this way it is possible to set and supervise the different functional parameters, input and output, of the production process during the different working steps. Such parameters, as well as being displayable in real time on the supervision processors, can be memorized in a data base, for example, divided between different controllers or in a single centralized memory.

However, it is not always possible to memorize efficiently the operating functioning parameters, for example previous ones, of a specific crystallizer or other connected element. In the example of the crystallizer, if it is temporarily removed for maintenance and is subsequently re-used on a different casting machine, it is not always possible to have said previous functioning parameters available.

Moreover, the replacement of a crystallizer always provides an installation step in which, after it has been assembled, together with the relative ingot mold, on an oscillating basement of a casting unit, it is also necessary to carry out a specific manual setting, for example by means of a suitable user interface of the electronic supervision processors, of some identification parameters of the crystallizer, such as for example to specify the material of the lining, the sizes of the products to be made, or others. In this way, the operating parameters of the production process of the steel products are set. These settings, since they are for example carried out manually, can be erroneous, thus causing problems at the beginning or during production.

Furthermore, when during the maintenance step or at the end of its working life, the crystallizer is subjected to the inspection check, it is not always possible to have a complete and exact summary of its actual working conditions, such as the overall number of casting hours, the average speed of casting or other, which would allow an analysis of the actual state of wear and tear depending on the conditions of use.

This, in its turn, determines an incorrect forecast of the average maximum working life of the crystallizers, and therefore, a possible lowering of the quality of the products produced, the possibility that the phenomena of "breakout" or "sticking" in the cast metal may occur more frequently, an increase in maintenance times and/or diagnostic times and therefore the reduction in productivity of the plant.

Document JP 2008 129838 discloses an RFID tag resistant to high temperatures, associable to a continuous casting line by means of magnetic means.

Document WO-A-2010/057656 describes a device for the active tracing of data and information in a metal working line.

Purpose of the present invention is to perfect a method to monitor a casting element, in particular a crystallizer, which allows to control in an efficient manner the operating state of the element, so as to reduce maintenance times and costs and allow to vary the functional parameters of the working according to the actual operating state of the element.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a method to monitor a casting element, which includes a crystallizer or an ingot mold, used in continuous casting in a production plant for steel products, comprises at least an installation step in which each casting element is assembled on a corresponding casting unit.

The method comprises at least an operating step in which the casting element is used to produce said steel products by casting molten metal in the crystallizer, in which the production of said steel products is controlled and supervised by means of electronic processing and control means.

According to one feature of the present invention, the method provides that memorization means are univocally and stably associated to each specific casting element used, in particular to the crystallizer, before or during the installation step. Said memorization means comprise an RFID tag of the readable/writable type, operatively connectable to the electronic processing and control means. Before the casting element is used in the production plant, its specific identifying parameters are memorized in said RFID tag. The identifying parameters are read by means of the electronic processing and control means and used at least to automatically set predetermined functional process parameters at the beginning and/or during the operating step to make the steel products with the specific casting element.

Thanks to the invention it is possible, for example, to reduce the installation times of the crystallizer in the production plant, at the same time reducing the possibility of making wrong settings of the functional process parameters.

According to the present invention, the identifying parameters comprise at least data relating to a univocal serial number, a design code, a specific radius of curvature, the sizes of the products that can be made, the specific material they are made of, the type of internal lining.

According to the present invention, at least predetermined functional process parameters are memorized in the RFID tag, relating to the corresponding casting element and detected and/or modified during the operating step.

In this way, it is possible to memorize in a univocal manner, in the electronic memorization means, the specific functional process parameters relating to each casting element, in particular of a crystallizer or an ingot mold associated to it, during its effective use. Both in the case of a temporary replacement or in the case of a definitive replacement of the crystallizer and/or the ingot mold, it is possible to maintain stably associated with the crystallizer and/or the ingot mold all the actual past data concerning its use, thus facilitating and improving the inspection analysis.

According to the present invention, the functional parameters memorized comprise at least the date of the first melting cycle, the number of hours in which the molten metal was inside the casting element, the number of working sequences, that is, the number of overall re-starts of the melting process, the date of the last melting, the casting speed, such as the average speed, or other specific statistical data relating to the crystallizer.

Moreover, if the crystallizer is re-used in the same or in another plant, the data memorized in the electronic means allow to keep an account of its actual past working life, preventing possible anomalies and malfunctions, such as for example the possibility that phenomena such as breakout and sticking occur in the molten metal.

According to the present invention, the RFID tag is stably coupled to each crystallizer at the end of its production so as to act as a memorization support for the logistic operations of storage and transport and, in the installation step, before the crystallizer is assembled on the ingot mold and used, the RFID tag is taken from the crystallizer and is assembled on the specific casting unit on one of its lower surfaces, at least partially inside a protection frame.

This solution allows to use very simple and low cost devices, easily applicable to the casting element, for example to crystallizers, during the production of the crystallizers themselves, and to connect them easily both to the electronic processing, supervision and control means, for example to specific PLC controllers, and also to connect them to analysis and diagnostic instruments when the crystallizers are sent to an assistance center or to the producer.

In this way it is also possible to carry out an average statistical analysis on different batches of crystallizers so as to make possible design corrections on subsequent production batches and therefore to increase the productive efficiency in production plants for steel products.

### BRIEF DESCRIPTION OF THE DRAWINGS

These and other characteristics of the present invention will become apparent from the following description of a preferential form of embodiment, given as a non-restrictive example with reference to the attached drawings wherein:

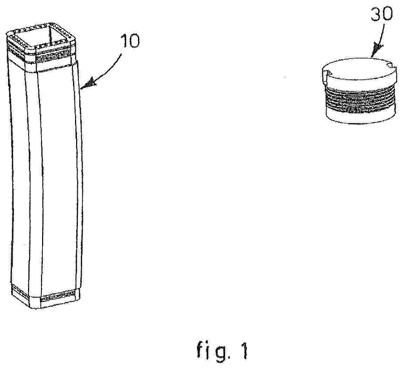

- fig. 1 is a schematic view of a crystallizer and of a supervision transducer associated thereto;
- fig. 2 is a partially sectioned lateral view of part of a casting unit comprising the crystallizer in fig. 1;
- fig. 3 is a simplified diagram of the electric connection of the transducer in fig. 1.

To facilitate comprehension, the same reference numbers have been used, where possible, to identify identical common elements in the drawings.

### DETAILED DESCRIPTION OF A PREFERENTIAL FORM OF EMBODIMENT

With reference to the attached drawings, a method to monitor casting elements, in this case a crystallizer 10, according to the present invention is used in the production of steel products, such as billets or others, in a relative production plant by means of continuous casting.

The method comprises an installation step in which each crystallizer 10 is assembled on a corresponding casting unit, not shown in the present drawings. In particular each tubular-type crystallizer 10, for example made of copper, is assembled in a known manner on an ingot mold 20 of the casting unit. The assembly of the crystallizer 10 and of the ingot mold 20 can be carried out at the start-up of the plant or subsequently, following its replacement at the end of the maximum functioning period, or for maintenance requirements.

The ingot mold 20 is attached in a known manner to an oscillating basement 23, disposed above the casting unit and suitable to oscillate, in a subsequent operating step, substantially in a vertical direction, that is, in a manner concordant with the direction of feed of the molten metal in the crystallizer 10. The oscillation of the oscillating basement 23 is carried out by a pair of opposite hydraulic cylinders 15.

Before the installation step, or during the installation step, an RFID memorization tag 30 of the readable/writable type in which at least specific identifying parameters are memorized, is associated to each crystallizer 10.

These parameters comprise at least a serial number able to univocally identify the specific crystallizer 10, advantageously also printed on a label incorporated to the crystallizer 10. The identifying parameters memorized in the RFID tag 30 also comprise an illustration code or drawing of the crystallizer 10, its radius of curvature, the sizes of the billets that can be made with the specific crystallizer 10, the material it is made of and the material of its internal lining.

The RFID tag 30 is advantageously of the passive type, therefore, without its own autonomous feed source and suitable to cooperate with a reading/writing head 35 as will be described hereafter.

The RFID tag 30 is stably coupled to each crystallizer 10 when its production is complete, usually by the producer, so as to act as a memorization support used in a known manner to facilitate the logistic operations of storage and transport.

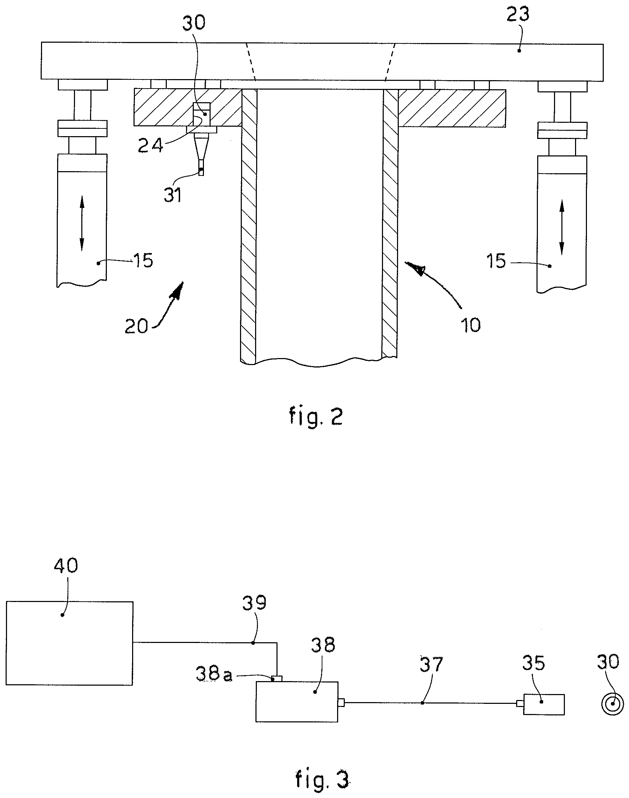

During the installation step (fig. 2), before the crystallizer 10 is mounted on the ingot mold 20 and used, the RFID tag 30 is taken from the crystallizer 10 and mounted on the specific casting unit, for example on the oscillating basement 23, on one of its lower surfaces and at least partially inside a protection frame, not shown.

In particular the RFID tag 30 is mounted in a hollow seating 24 made on the lower surface of the oscillating basement 23. The RFID tag 30 is inserted at a determinate depth into the hollow seating 24 and is connected to a corresponding transmission and reception antenna 31 attached in correspondence to the hollow seating 24 and disposed protruding below the oscillating basement 23. The antenna 31 is suitable both to receive the electromagnetic energy irradiated by the reading/writing head 35, in order to transform it into corresponding electric energy so as to feed the RFID tag 30, and to receive the data to be memorized in the RFID tag 30 and to transmit to the reading /writing head 35 the data already memorized in the RFID tag 30.

The reading/writing head 30 is positioned stably, for example attached on an attachment bracket, in close proximity to the antenna 31 so as to allow reciprocal interaction. It is understood that the reading/writing head 35 can also be selectively positioned in proximity to the antenna 31 only when it is necessary to carry out the reading and writing operations. For example, the reading /writing head 35 can be associated to a movement member, such as for example a telescopic arm in which the reading/writing head 35 is disposed at one end of the arm.

With reference to fig. 3, in which an electric connection diagram is shown, the reading/writing head 35 is electrically connected by means of a cable 37 to a specific microprocessor unit 38, suitable to transmit and receive the data to/from the reading/writing head 35 and to supply the correct tension and feed current to it. The microprocessor unit 38 is also provided with a data output 38a connected by means of a data line 39, such as for example a Profibus network or other suitable fieldbus, to a controller or PLC, 40 (Programmable Logic Controller) suitable to control and supervise several RFID tags 30 of other crystallizers of other casting lines and other process variables.

The PLCs 40 are also connected to one or more supervision units, such as one or more electronic processors provided with a user interface able to display efficiently the whole production process.

At the end of the installation step or in any case before beginning a subsequent operating step, it is possible to read the identifying data of the crystallizer 10 thus installed, contained in the reading/writing head 35, and to transfer them to the PLC 40 and/or to the supervision processors. This allows to set, automatically, determinate functional process parameters, for example of the melting, casting or other, reducing the initial set-up times and avoiding the possibility of committing insertion errors.

The method according to the present invention comprises an operating step in which the casting line in which the crystallizer 10 has been installed is made to function, introducing the molten metal into the crystallizer 10 and determining the exit thereof into a subsequent rolling unit, controlling and supervising the whole production plant by means of the supervision processors and the different PLCs 40.

In correspondence with the first casting where the specific crystallizer 10 is used, by means of the associated PLC the relative start date of its operating use is memorized in the corresponding RFID tag 30. Other data may also be memorized in the RFID tag 30, for example relating to the identification of the specific casting line in which the crystallizer 10 is installed.

Furthermore, during the operating step, other data are memorized in the RFID tag 30, at predetermined instants, relating to functioning parameters of the specific crystallizer 10 during functioning. For example, the number of hours of actual use of the specific crystallizer 10 is memorized, that is, the number of hours in which the molten metal has been present inside the crystallizer 10, plus the number of working sequences carried out, in this case the number of re-starts of the casting process that have been carried out.

The date of the last casting for melting which was made is also advantageously memorized. The average casting speed is also memorized, or other specific statistical data relating to the crystallizer 10, processed for example by the PLC 40 or by the supervision processors. This allows to memorize the past state of use of the crystallizer 10 in a univocal manner.

In this way, during the operating step it is possible to vary and adapt the process parameters, actually taking into account the working life of the crystallizer 10 installed, that is, the hours of work as memorized in the RFID tag 30. This allows to adjust, for example, the casting speed according to the past use actually memorized in the crystallizer 10, reducing the possibility of phenomena of breakout and sticking occurring in the molten metal being cast.

At the end of the maximum working life of the crystallizer 10, that is, when a maximum number of hours of actual use has been reached, according to the data memorized in the RFID tag 30, the casting line is stopped to allow the ingot mold 20 and the associated crystallizer 10 to be removed from the casting unit, together with the associated RFID tag 30. The mold 20, the crystallizer 10 and the RFID tag 30 are then sent to a maintenance center where, after separating the crystallizer 10 and the RFID tag 30 of the mold 20, the data memorized in the RFID tag 30 are downloaded and transferred to a database. This allows, for example, to analyze more deeply the state of use of the specific crystallizer 10 according to the data actually memorized in the RFID tag 30 and to carry out average statistical analyses on different production batches of crystallizer, so as to make design changes and/or corrections possible.

## Claims

1. Method to monitor a casting element, which includes a crystallizer (10) or an ingot mold (20), used in continuous casting in a production plant for steel products, comprising at least an installation step in which each casting element (10, 20) is associated with a corresponding casting unit, and at least an operating step in which the casting element (10, 20) is used to produce said steel products by casting molten metal in the crystallizer (10), wherein the production of said steel products is controlled and supervised by electronic processing and control means (40), **characterized in that** said method comprises:
- univocally and stably associating memorization means with each specific casting element (10, 20) before or during the installation step, wherein said memorization means comprise an RFID tag (30) of the readable/writable type, operatively connectable to the electronic processing and control means (40),
- memorizing identifying parameters, before the casting element (10, 20) is used, in said RFID tag (30),
- said identifying parameters being read by the electronic processing and control means (40) and used at least to automatically set predetermined functional process parameters at the beginning and/or during the operating step,
- wherein said identifying parameters at least comprise data relating to a univocal series number, to a design code, to the radius of curvature, to the sizes of the products that can be made, to the specific material they are made of, to the type of internal lining,
- wherein in the RFID tag (30) predetermined functional process parameters are at least memorized relating to the corresponding casting element (10, 20) as detected and/or modified during the operating step and which also comprise at least the date of the first melting, the number of hours in which the molten metal was present in the casting element (10, 20), the number of working sequences, the date of the last melting, the speed of casting, the average speed of casting,
- wherein moreover the RFID tag (30) is stably coupled to each crystallizer (10) at the end of its production so as to act as a memorization support for the logistic operations of storage and transport and, in the installation step, before the crystallizer (10) is assembled on the ingot mold (20) and used, the RFID tag (30) is taken from the crystallizer (10) and is assembled on the specific casting unit on one of its lower surfaces, at least partially inside a protection frame.

2. Method as in claim 1, **characterized in that** the RFID tag (30) is assembled in a hollow seating (24) made on the lower surface of the oscillating basement (23) of the casting unit.

3. Method as in claim 2, **characterized in that** the RFID tag (30) is inserted at a determinate depth in the hollow seating (24) and is connected to a corresponding transmission and reception antenna (31) attached in correspondence to the hollow seating (24) and disposed protruding below the oscillating basement (23).

4. Method as in claim 3, **characterized in that** it provides the cooperation of the RFID tag (30) with a reading/writing head (35) stably positioned in close proximity to the antenna (31) so as to allow the reciprocal interaction thereof, or the reading/writing head (35) is selectively positioned in proximity to the antenna (31) only when it is necessary to carry out the reading/writing operations and the antenna (31) not only receives the electromagnetic energy radiated by the reading/writing head (35), in order to transform it into corresponding electric energy to feed the RFID tag (30), but also receives the data to be memorized in the RFID tag (30) and also transmits the data already memorized in the RFID tag (30) to the reading/writing head (35).

5. Method as in claim 4, **characterized in that** it provides to electrically connect the reading/writing head (35) by means of a cable (37) to a microprocessor unit (38), which transmits and receives the data to/from the writing/reading head (35), supplies to said writing/reading head (35) the correct feed tension and current, and communicates the data to said electronic processing and control means (40) by means of a data line (39) which connects a data output (38a) to said electronic processing and control means (40), said electronic processing and control means (40) controlling and supervising several RFID tags (30) of other crystallizers of other casting lines and other process variables and also being connected to one or more supervision units with user interface able to display effectively the entire production process.

6. Method as in any claim hereinbefore, **characterized in that,** at the end of the installation step or in any case before beginning a subsequent operating step, it provides to read the identifying data of the crystallizer (10) thus installed contained in the reading/writing head (35) and to transfer them at least to said electronic processing and control means (40) in order to set, in a substantially automatic manner, determinate functional process parameters of the melting, casting or other.

7. Method as in any claim hereinbefore, **characterized in that** it provides to vary and adapt the process parameters bearing in mind the working life of the crystallizer (10) installed, according to the working hours as memorized in the RFID tag (30), adjusting the casting speed depending on past use as actually memorized of the crystallizer (10).

8. Method as in any claim hereinbefore, **characterized in that** at the end of the maximum working life of the crystallizer (10), once a maximum number of hours of actual use have been reached according to the data in the RFID tag (30), the casting line is stopped to allow the removal of the ingot mold (20) and of the associated crystallizer (10) from the casting unit together with the associated RFID tag (30), the ingot mold (20), the crystallizer (10) and the RFID tag (30) are sent to a maintenance center where, after the crystallizer (10) and the RFID tag (30) have been separated, the data memorized in the RFID tag (30) are downloaded and transferred into a data base and the state of use of the specific crystallizer (10) is subsequently analyzed according to the data actually memorized in the RFID tag (30) and average statistical analyses are carried out on different production batches of the crystallizers so as to make any necessary design modifications and/or corrections.

9. Production plant for steel products provided with at least a casting element, which includes an ingot mold (20) and an associated crystallizer (10) assembled on a corresponding casting unit, the plant being controlled and supervised by electronic processing and control means (40), **characterized in that**
- each casting element (10, 20) is provided with memorization means which comprise an RFID tag (30), of the readable/writable type, operatively associable with said electronic processing and control means (40), so as to memorize specific identifying parameters, said identifying parameters being transferred to the electronic processing and control means (40) at least to set, substantially automatically, predetermined functional process parameters,
- wherein said identifying parameters comprise at least data relating to a univocal series number, to a design code, to the radius of curvature, to the sizes of the products that can be made, to the specific material they are made of, to the type of internal lining,
- wherein said memorization means (30) are able to memorize predetermined functional process parameters relating to the casting element (10, 20), as detected and/or modified during its functioning and which comprise at least the date of the first melting, the number of hours in which the molten metal was present in the casting element (10, 20), the number of working sequences, the date of the last melting, the speed of casting, the average speed of casting,
- wherein each crystallizer (10) is provided for stably coupling to a respective RFID tag (30) in a first mounting condition of said RFID tag (30) at the end of the production of the crystallizer (10), said RFID tag (30) being configured to act as a memorization support for the logistic operations of storage and transport, and
- wherein each specific casting unit is configured for mounting said RFID tag (30) in a second mounting condition of said RFID tag (30), in an installation step in which each casting element (10, 20) is associated with a corresponding casting unit, before the crystallizer (10) is assembled on the ingot mold (20) and used, wherein the RFID tag (30) is able to be taken from the crystallizer (10) and assembled on the specific casting unit on one of its lower surfaces, at least partially inside a protection frame.

10. Plant as in claim 9, **characterized in that** the RFID tag (30) in the second mounting condition is inserted at a determinate depth in a hollow seating (24) made on the lower surface of the oscillating basement (23) of the casting unit.

11. Plant as in claim 10, **characterized in that** it includes a transmission and reception antenna (31) attached in correspondence to the hollow seating (24) and disposed protruding below the oscillating basement (23), which is able to be connected to the RFID tag (30).

12. Plant as in claim 9, 10 or 11, **characterized in that** it comprises a reading/writing head (35) able to cooperate with the RFID tag (30) and the antenna (31) is configured to receive the electromagnetic energy irradiated by the reading/writing head (35), in order to transform it into corresponding electric energy to feed the RFID tag (30), to receive the data to be memorized in the RFID tag (30) and to transmit the data already memorized in the RFID tag (30) to the reading/writing head (35).

13. Plant as in claims 11 or 12, **characterized in that** the reading/writing head (35) is electrically connected by means of a cable (37) to a microprocessor unit (38), which is configured to transmit and receive the data to/from the writing/reading head (35), to supply to said writing/reading head (35) the correct feed tension and current and is, moreover, associated by means of a respective data output (38a) to a data line (39) connecting to said electronic processing and control means (40), said electronic processing and control means (40) being configured to control and supervise several RFID tags (30) of other crystallizers of other casting lines and other process variables and are also connected to one or more supervision units with user interface able to display effectively the entire production process.

## Patentansprüche

1. Verfahren zum Überwachen eines Gießelementes, welches einen Kristallisator (10) oder eine Barrenform (20) aufweist, das beim Stranggießen in einer Produktionsanlage für Stahlprodukte verwendet wird, das wenigstens einen Installationsschritt, in welchem jedes Gießelement (10, 20) mit einer entsprechenden Gießeinheit assoziiert wird, und wenigstens einen Betriebsschritt, in welchem das Gießelement (10, 20) zum Produzieren der Stahlprodukte durch Gießen von geschmolzenen Metall in den Kristallisator (10) verwendet wird, aufweist, wobei die Produktion der Stahlprodukte durch elektronische Verarbeitungs- und Steuermittel (40) gesteuert und überwacht wird, **dadurch gekennzeichnet, dass** das Verfahren folgendes aufweist:
- eindeutiges und stabiles Assoziieren von Memorisierungsmitteln mit jedem spezifischen Gießelement (10, 20) vor oder während des Installationsschritts, wobei die Memorisierungsmittel einen RFID-Tag (30) vom lesbaren/schreibbaren Typ aufweisen, welcher betriebsmäßig mit den elektronischen Verarbeitungs- und Steuermitteln (40) verbindbar ist,
- Memorisieren von Identifikationsparametern, und zwar bevor das Gießelement (10, 20) verwendet wird, in dem RFID-Tag (30),
- wobei die Identifikationsparameter durch die elektronischen Verarbeitungs- und Steuermitteln (40) gelesen und wenigstens zum automatischen Einstellen vorbestimmter funktionaler Prozessparameter zu Beginn und/oder während des Betriebsschritts verwendet werden,
- wobei die Identifikationsparameter wenigstens Daten in Bezug auf eine eindeutige Seriennummer, auf einen Designcode, auf den Krümmungsradius, auf die Größen der Produkte, die hergestellt werden können, auf das spezifische Material, aus dem sie hergestellt sind, auf die Art der Innenauskleidung aufweisen,
- wobei in dem RFID-Tag (30) vorbestimmte funktionale Prozessparameter in Bezug auf das entsprechende Gießelement (10, 20) wenigstens memorisiert sind, und zwar wie sie während des Betriebsschritts detektiert und/oder geändert werden, und welche auch wenigstens das Datum des ersten Schmelzens, die Anzahl der Stunden, in welchen das geschmolzene Metall in dem Gießelement (10, 20) vorhanden war, die Anzahl der Arbeitssequenzen, das Datum des letzten Schmelzens, die Geschwindigkeit des Gießens, die durchschnittliche Geschwindigkeit des Gießens aufweisen,
- wobei außerdem der RFID-Tag (30) stabil mit jedem Kristallisator (10) am Ende seiner Produktion gekuppelt ist, um als Memorisierungsunterstützung für die logistischen Betriebe von Lagerung und Transport zu wirken und, in dem Installationsschritt, bevor der Kristallisator (10) auf der Barrenform (20) zusammengebaut und verwendet wird, der RFID-Tag (30) von dem Kristallisator (10) genommen wird und auf der spezifischen Gießeinheit auf einer ihrer unteren Oberflächen zusammengebaut wird, und zwar wenigstens teilweise innerhalb eines Schutzrahmens.

2. Verfahren nach Anspruch 1, **dadurch gekennzeichnet, dass** der RFID-Tag (30) in einem hohlen Sitz (24), der auf der unteren Oberfläche der oszillierenden Basis (23) der Gießeinheit hergestellt ist, zusammengebaut wird.

3. Verfahren nach Anspruch 2, **dadurch gekennzeichnet, dass** der RFID-Tag (30) in einer bestimmten Tiefe in dem hohlen Sitz (24) eingesetzt wird und mit einer entsprechenden Sende- und Empfangsantenne (31) verbunden wird, die entsprechend zu dem hohlen Sitz (24) angebracht ist und vorstehend unterhalb der oszillierenden Basis (23) angeordnet ist.

4. Verfahren nach Anspruch 3, **dadurch gekennzeichnet, dass** es das Zusammenarbeiten des RFID-Tags (30) mit einem Lese-/Schreib-Kopf (35) vorsieht, der stabil in unmittelbarer Nähe der Antenne (31) positioniert ist, um so die wechselseitige Wechselwirkung davon zu gestatten, oder der Lese-/Schreib-Kopf (35) ist selektiv nur in der Nähe der Antenne (31) positioniert, wenn es erforderlich ist, die Lese-/Schreib-Operationen durchzuführen und die Antenne (31) nicht nur die von dem Lese-/Schreib-Kopf (35) abgestrahlte elektromagnetische Energie empfängt, um sie in entsprechende elektrische Energie zur Speisung des RFID-Tags (30) umzuwandeln, sondern auch die in dem RFID-Tag (30) zu memorisierenden Daten empfängt und auch die im RFID-Tag (30) bereits memorisierten Daten an den Lese-/Schreib-Kopf (35) sendet.

5. Verfahren nach Anspruch 4, **dadurch gekennzeichnet, dass** es vorsieht, den Lese-/Schreib-Kopf (35) mittels eines Kabels (37) elektrisch mit einer Mikroprozessoreinheit (38) zu verbinden, welche die Daten an den/von dem Schreib-/Lese-Kopf (35) sendet und empfängt, an den Schreib-/Lese-Kopf (35) die korrekte Speisespannung und -strom liefert, und die Daten an die elektronischen Verarbeitungs- und Steuermittel (40) mittels einer Datenleitung (39), welche einen Datenausgang (38a) mit den elektronischen Verarbeitungs- und Steuermitteln (40) verbindet, kommuniziert, wobei die elektronischen Verarbeitungs- und Steuermittel (40) mehrere RFID-Tags (30) von anderen Kristallisatoren von anderen Gießlinien und andere Prozessvariable steuern und überwachen, und wobei sie auch mit einer oder mehreren Überwachungseinheiten mit Benutzeroberfläche, die zur effektiven Anzeige des gesamten Produktionsprozesses fähig ist, verbunden sind.

6. Verfahren nach einem der vorhergehenden Ansprüche, **dadurch gekennzeichnet, dass** am Ende des Installationsschritts oder in jedem Fall vor Beginn eines darauffolgenden Betriebsschritts, es das Lesen der Identifikationsdaten des Kristallisators (10), auf diese Weise installiert und in dem Lese-/Schreib-Kopf (35) enthalten, und das Übertragen dieser wenigstens an die elektronischen Verarbeitungs- und Steuermittel (40) vorsieht, um, in einer im wesentlichen automatischen Weise, bestimmte funktionale Prozessparameter des Schmelzens, Gießens oder anderen einzustellen.

7. Verfahren nach einem der vorhergehenden Ansprüche, **dadurch gekennzeichnet, dass** es vorsieht, die Prozessparameter unter Berücksichtigung der Lebensdauer des installierten Kristallisators (10) zu variieren und anzupassen, und zwar gemäß der Arbeitsstunden wie in dem RFID-Tag (30) memorisiert, wobei die Geschwindigkeit des Gießens in Abhängigkeit von der vergangenen Verwendung wie sie tatsächlich vom Kristallisator (10) memorisiert ist, eingestellt wird.

8. Verfahren nach einem der vorhergehenden Ansprüche, **dadurch gekennzeichnet, dass** am Ende der maximalen Lebensdauer des Kristallisators (10), wenn einmal eine maximale Anzahl von Stunden der tatsächlichen Nutzung erreicht worden ist, und zwar gemäß den Daten in dem RFID-Tag (30), die Gießlinie gestoppt wird, um das Entfernen der Barrenform (20) und des assoziierten Kristallisators (10) von der Gießeinheit zusammen mit dem assoziierten RFID-Tag (30) zu gestatten, die Barrenform (20), der Kristallisator (10) und der RFID-Tag (30) an ein Wartungszentrum gesendet werden, wo, nachdem der Kristallisator (10) und der RFID-Tag (30) getrennt wurden sind, die im RFID-Tag (30) memorisierten Daten heruntergeladen und in eine Datenbank übertragen werden und der Gebrauchszustand des spezifischen Kristallisators (10) darauffolgend gemäß den in dem RFID-Tag (30) tatsächlich memorisierten Daten analysiert wird und durchschnittliche statistische Analysen an verschiedenen Produktionschargen der Kristallisatoren durchgeführt werden, um so irgendwelche erforderliche Design-Änderungen und/oder -Korrekturen zu machen.

9. Produktionsanlage für Stahlprodukte, die mit wenigstens einem Gießelement versehen ist, welches eine Barrenform (20) und einen assoziierten Kristallisator (10), welcher auf einer entsprechenden Gießeinheit zusammengebaut ist, aufweist, wobei die Anlage durch elektronische Verarbeitungs- und Steuermittel (40) gesteuert und überwacht ist, **dadurch gekennzeichnet, dass**
- jedes Gießelement (10, 20) mit Memorisierungsmitteln versehen ist, welche ein RFID-Tag (30) vom lesbaren/schreibbaren Typ aufweisen, und zwar betriebsmäßig mit den elektronischen Verarbeitungs- und Steuermitteln (40) assoziierbar, um so spezifische Identifikationsparameter zu memorisieren, wobei die Identifikationsparameter zu den elektronischen Verarbeitungs- und Steuermittel (40) übertragen werden, um wenigstens, im Wesentlichen automatisch, vorbestimmte funktionale Prozessparameter einzustellen,
- wobei die Identifikationsparameter wenigstens Daten in Bezug auf eine eindeutige Seriennummer, auf einen Designcode, auf den Krümmungsradius, auf die Größen der Produkte, die hergestellt werden können, auf das spezifische Material, aus dem sie hergestellt sind, auf die Art der Innenauskleidung aufweisen,
- wobei die Memorisierungsmittel (30) fähig sind, vorbestimmte funktionale Prozessparameter in Bezug auf das Gießelement (10, 20) zu memorisieren, und zwar wie während seines Funktionierens detektiert und/oder geändert wurde, und welche wenigstens das Datum des ersten Schmelzens, die Anzahl der Stunden, in welchen das geschmolzene Metall in dem Gießelement (10, 20) vorhanden war, die Anzahl der Arbeitssequenzen, das Datum des letzten Schmelzens, die Geschwindigkeit des Gießens, die durchschnittliche Geschwindigkeit des Gießens aufweisen,
- wobei jeder Kristallisator (10) für eine stabile Kupplung an einen entsprechenden RFID-Tag (30) in einem ersten Befestigungszustand des RFID-Tags (30) am Ende der Produktion des Kristallisators (10) vorgesehen ist, wobei der RFID-Tag (30) konfiguriert ist, um als eine Memorisierungsunterstützung für die logistischen Betriebe von Lagerung und Transport zu wirken, und
- wobei jede spezifische Gießeinheit zum Befestigen des RFID-Tags (30) in einem zweiten Befestigungszustand des RFID-Tags (30) konfiguriert ist, in einem Installationsschritt, in welchem jedes Gießelement (10, 20) mit einer entsprechenden Gießeinheit assoziiert wird, und zwar bevor der Kristallisator (10) auf der Barrenform (20) zusammengebaut und verwendet wird, wobei der RFID-Tag (30) fähig ist, von dem Kristallisator (10) genommen zu werden und auf die spezifische Gießeinheit auf einer ihrer unteren Oberflächen zusammengebaut zu werden, und zwar wenigstens teilweise innerhalb eines Schutzrahmens.

10. Anlage nach Anspruch 9, **dadurch gekennzeichnet, dass** der RFID-Tag (30) in dem zweiten Montagezustand in einer bestimmten Tiefe in einem hohlen Sitz (24), der auf der unteren Oberfläche der oszillierenden Basis (23) der Gießeinheit hergestellt ist, eingesetzt ist.

11. Anlage nach Anspruch 10, **dadurch gekennzeichnet, dass** diese eine Sende- und Empfangsantenne (31) aufweist, die entsprechend zu dem hohlen Sitz (24) angebracht ist und vorstehend unterhalb der oszillierenden Basis (23) angeordnet ist, und welche fähig ist, mit dem RFID-Tag (30) verbunden zu werden.

12. Anlage nach Anspruch 9, 10 oder 11, **dadurch gekennzeichnet, dass** diese einen Lese-/Schreib-Kopf (35) aufweist, der fähig ist mit dem RFID-Tag (30) zusammenzuarbeiten und die Antenne (31) zum Empfangen der vom Lese-/Schreib-Kopf (35) abgestrahlten elektromagnetischen Energie konfiguriert ist, um diese in entsprechende elektrische Energie zur Speisung des RFID-Tags (30) umzuwandeln, um die im RFID-Tag (30) zu memorisierenden Daten zu empfangen und die im RFID-Tag (30) bereits memorisierten Daten an den Lese-/Schreib-Kopf (35) zu senden.

13. Anlage nach Anspruch 11 oder 12, **dadurch gekennzeichnet, dass** der Lese-/SchreibKopf (35) mittels eines Kabels (37) mit einer Mikroprozessoreinheit (38) elektrisch verbunden ist, welche zum Senden und Empfangen der Daten an den/von dem Schreib-/Lese-Kopf (35) konfiguriert ist, um an den Schreib-/Lese-Kopf (35) die richtige Speisespannung und -strom zu liefern, und, darüber hinaus, mittels eines jeweiligen Datenausgangs (38a) mit einer Datenleitung (39) assoziiert ist, welche mit den elektronischen Verarbeitungs- und Steuermitteln (40) verbindet, wobei die elektronischen Verarbeitungs- und Steuermittel (40) konfiguriert sind, um mehrere RFID-Tags (30) von anderen Kristallisatoren anderer Gießlinien und andere Prozessvariable zu steuern und zu überwachen, und auch mit einer oder mehreren Überwachungseinheiten mit Benutzeroberfläche, die zur effektiven Anzeige des gesamten Produktionsprozesses fähig ist, verbunden sind.

## Revendications

1. Méthode de surveillance d'un élément de coulée comprenant un cristallisateur (10) ou une lingotière (20), utilisé en coulée continue dans une usine de production de produits en acier, comprenant au moins une étape d'installation dans laquelle chaque élément de coulée (10, 20) est associé à une unité de coulée correspondante, et au moins une étape de fonctionnement dans laquelle l'élément de coulée (10, 20) est utilisé pour produire lesdits produits en acier par coulée de métal en fusion dans le cristallisateur (10), dans laquelle la production desdits produits en acier est commandée et supervisée par des moyens de traitement et de commande électroniques (40), **caractérisée en ce que** ladite méthode comprend les étapes consistant à :
- associer de manière univoque et stable des moyens de mémorisation à chaque élément de coulée spécifique (10, 20) avant ou pendant l'étape d'installation, lesdits moyens de mémorisation comprenant une étiquette RFID (30) du type lisible/inscriptible, pouvant être connectée de manière opérationnelle aux moyens de traitement et de commande électroniques (40),
- mémoriser des paramètres d'identification, avant que l'élément de coulée (10, 20) ne soit utilisé, dans ladite étiquette RFID (30),
- lesdits paramètres d'identification étant lus par les moyens de traitement et de commande électroniques (40) et utilisés au moins pour établir automatiquement des paramètres de processus fonctionnels prédéterminés au début et/ou pendant l'étape de fonctionnement,
- dans laquelle lesdits paramètres d'identification comprennent au moins des données relatives à un numéro de série univoque, à un code de conception, au rayon de courbure, aux tailles des produits pouvant être fabriqués, au matériau spécifique en lequel ils sont fabriqués, au type de la doublure interne,
- dans laquelle, dans l'étiquette RFID (30), des paramètres de processus fonctionnels prédéterminés sont au moins mémorisés concernant l'élément de coulée (10, 20) correspondant détectés et/ou modifiés au cours de l'étape de fonctionnement, et qui comprennent également au moins la date de la première fusion, le nombre d'heures de présence du métal en fusion dans l'élément de coulée (10, 20), le nombre de séquences de travail, la date de la dernière fusion, la vitesse de coulée, la vitesse de coulée moyenne,
- dans laquelle de plus l'étiquette RFID (30) est couplée de manière stable à chaque cristallisateur (10) à la fin de sa production, de manière à servir de support de mémorisation pour les opérations logistiques de stockage et de transport et, lors de l'étape d'installation, avant que le cristallisateur (10) soit assemblé sur la lingotière (20) et utilisé, l'étiquette RFID (30) est extraite du cristallisateur (10) et assemblée sur l'unité de coulée spécifique sur l'une de ses surfaces inférieures, au moins partiellement à l'intérieur d'un cadre de protection.

2. Méthode selon la revendication 1, **caractérisée en ce que** l'étiquette RFID (30) est assemblée dans un siège creux (24) réalisé sur la surface inférieure du socle oscillant (23) de l'unité de coulée.

3. Méthode selon la revendication 2, **caractérisée en ce que** l'étiquette RFID (30) est insérée à une profondeur déterminée dans le siège creux (24) et est connectée à une antenne d'émission et de réception correspondante (31) fixée en correspondance avec le siège creux (24) et disposés en saillie sous le socle oscillant (23).

4. Méthode selon la revendication 3, **caractérisée en ce qu'elle** prévoit la coopération de l'étiquette RFID (30) avec une tête de lecture/écriture (35) positionnée de manière stable à proximité étroite de l'antenne (31) de manière à permettre son interaction réciproque, ou la tête de lecture/écriture (35) est positionnée sélectivement à proximité de l'antenne (31) uniquement lorsqu'il est nécessaire d'effectuer les opérations de lecture/écriture et que l'antenne (31) reçoit non seulement l'énergie électromagnétique rayonnée par la tête de lecture/écriture (35), afin de la transformer en énergie électrique correspondante pour alimenter l'étiquette RFID (30), mais reçoit également les données à mémoriser dans l'étiquette RFID (30) et transmet également les données déjà mémorisées dans l'étiquette RFID (30) à la tête de lecture/écriture (35).

5. Méthode selon la revendication 4, **caractérisée en ce qu'elle** prévoit une connexion électrique de la tête de lecture/écriture (35) au moyen d'un câble (37) à une unité de microprocesseur (38), qui transmet et reçoit les données à/de la tête de lecture/écriture (35), fournit à ladite tête d'écriture/lecture (35) la tension et le courant d'alimentation corrects, et communique les données auxdits moyens de traitement et de commande électroniques (40) au moyen d'une ligne de données (39) qui relie une sortie de données (38a) auxdits moyens de traitement et de commande électroniques (40), lesdits moyens de traitement et de commande électroniques (40) commandant et surveillant plusieurs étiquettes RFID (30) d'autres cristallisateurs d'autres lignes de coulée et d'autres variables de processus et étant également connectés à une ou plusieurs unités de supervision avec une interface utilisateur pouvant afficher efficacement l'ensemble du processus de production.

6. Méthode selon l'une quelconque des revendications précédentes, **caractérisée en ce que,** à la fin de l'étape d'installation ou dans tous les cas avant de commencer une étape d'opération ultérieure, il est prévu de lire les données d'identification du cristallisateur (10) ainsi installé contenues dans la tête de lecture/écriture (35) et de les transférer au moins auxdits moyens de traitement et de commande électroniques (40) afin de régler, de manière sensiblement automatique, des paramètres de processus fonctionnels déterminés de la fusion, de la coulée ou autre.

7. Méthode selon l'une quelconque des revendications précédentes, **caractérisée en ce qu'elle** prévoit de faire varier et d'adapter les paramètres de processus en tenant compte de la durée de vie du cristallisateur (10) installé, en fonction des heures de travail mémorisées dans l'étiquette RFID (30), en réglant la vitesse de coulée en fonction de l'utilisation passée telle que mémorisée réellement dans le cristallisateur (10).

8. Méthode selon l'une quelconque des revendications précédentes, **caractérisée en ce que,** à la fin de la durée de vie maximale du cristallisateur (10), une fois qu'un nombre maximal d'heures d'utilisation réelle a été atteint conformément aux données de l'étiquette RFID (30), la ligne de coulée est arrêtée pour permettre le retrait de la lingotière (20) et du cristallisateur associé (10) à partir de l'unité de coulée en même temps que l'étiquette RFID associée (30), la lingotière (20), le cristallisateur (10) et l'étiquette RFID (30) sont envoyés à un centre de maintenance où, après la séparation du cristallisateur (10) et de l'étiquette RFID (30), les données mémorisées dans l'étiquette RFID (30) sont téléchargées et transférées dans une base de données et l'état d'utilisation du cristallisateur spécifique (10) est ensuite analysé en fonction des données réellement mémorisées dans l'étiquette RFID (30) et des analyses statistiques moyennes sont effectuées sur différents lots de fabrication des cristallisateurs de manière à apporter les modifications de conception et/ou corrections nécessaires.

9. Installation de production de produits en acier pourvue d'au moins un élément de coulée, qui comprend une lingotière (20) et un cristallisateur associé (10) assemblés sur une unité de coulée correspondante, l'installation étant commandée et surveillée par des moyens de traitement et de commande électroniques (40) **caractérisée en ce que**
- chaque élément de coulée (10, 20) est muni de moyens de mémorisation qui comprennent une étiquette RFID (30), du type lisible/inscriptible, pouvant être associée de manière opérationnelle auxdits moyens de traitement et de commande électroniques (40), afin de mémoriser des paramètres d'identification spécifiques, lesdits paramètres d'identification étant transférés aux moyens de traitement et de commande électroniques (40) au moins pour régler, de manière sensiblement automatique, des paramètres de processus fonctionnels prédéterminés,
- dans laquelle lesdits paramètres d'identification comprennent au moins des données relatives à un numéro de série univoque, à un code de conception, au rayon de courbure, aux tailles des produits pouvant être fabriqués, au matériau spécifique en lequel ils sont fabriqués, au type de la doublure interne,
- dans laquelle lesdits moyens de mémorisation (30) sont capables de mémoriser des paramètres de processus fonctionnels prédéterminés relatifs à l'élément de coulée (10, 20), tels que détectés et/ou modifiés au cours de son fonctionnement et comprenant au moins la date de la première fusion, le nombre le nombre d'heures pendant lesquelles le métal en fusion était présent dans l'élément de coulée (10, 20), le nombre de séquences de travail, la date de la dernière fusion, la vitesse de coulée, la vitesse de coulée moyenne,
- dans laquelle chaque cristallisateur (10) est prévu pour être couplé de manière stable à une étiquette RFID respective (30) dans une première condition de montage de ladite étiquette RFID (30) à la fin de la fabrication du cristallisateur (10), ladite étiquette RFID (30) étant configuré pour servir de support de mémorisation pour les opérations logistiques de stockage et de transport, et
- dans laquelle chaque unité de coulée spécifique est configurée pour monter ladite étiquette RFID (30) dans une seconde condition de montage de ladite étiquette RFID (30), dans une étape d'installation dans laquelle chaque élément de coulée (10, 20) est associé à une unité de coulée correspondante, avant que le cristallisateur (10) soit assemblé sur la lingotière (20) et utilisé, dans laquelle l'étiquette RFID (30) peut être extraite du cristallisateur (10) et assemblée sur l'unité de coulée spécifique sur l'une de ses surfaces inférieures, au moins partiellement à l'intérieur d'un cadre de protection.

10. Installation selon la revendication 9, **caractérisée en ce que** l'étiquette RFID (30) dans la seconde condition de montage est insérée à une profondeur déterminée dans un siège creux (24) réalisé sur la surface inférieure du socle oscillant (23) de l'unité de coulée.

11. Installation selon la revendication 10, **caractérisée en ce qu'elle** comprend une antenne d'émission et de réception (31) fixée en correspondance avec le siège creux (24) et disposée en saillie sous le socle-sol oscillant (23), qui peut être connectée à l'étiquette RFID (30).

12. Installation selon la revendication 9, 10 ou 11, **caractérisée en ce qu'elle** comprend une tête de lecture/écriture (35) apte à coopérer avec l'étiquette RFID (30) et l'antenne (31) est configurée pour recevoir l'énergie électromagnétique irradiée par la tête de lecture/écriture (35), pour la transformer en énergie électrique correspondante pour alimenter l'étiquette RFID (30), pour recevoir les données à mémoriser dans l'étiquette RFID (30) et pour transmettre les données déjà mémorisées dans l'étiquette RFID (30) à la tête de lecture/écriture (35).

13. Installation selon les revendications 11 ou 12, **caractérisée en ce que la** tête de lecture/écriture (35) est connectée électriquement au moyen d'un câble (37) à une unité de microprocesseur (38) configurée pour transmettre et recevoir à/de la tête de lecture/écriture (35), pour fournir à ladite tête d'écriture/lecture (35) la tension d'alimentation et le courant corrects et est, de plus, associée au moyen d'une sortie de données respective (38a) à une ligne de données (39) se connectant aux moyens de traitement et de commande électroniques (40), les moyens de traitement et de commande électroniques (40) étant configurés pour commander et superviser plusieurs étiquettes RFID (30) d'autres cristallisateurs d'autres lignes de coulée et d'autres variables de processus et sont également connectés à une ou plusieurs unités de supervision avec une interface utilisateur capables d'afficher efficacement l'ensemble du processus de production.
